# FASCICULE DE BREVET EUROPEEN

(11) **EP 3 209 908 B1**
(45) Date de publication et mention de la délivrance du brevet: **25.11.2020**
(21) Numéro de dépôt: 15788131.9
(22) Date de dépôt: 02.10.2015
(51) Int. Cl.: F16H 59/02, F16H 61/22

(54) **DISPOSITIF PERMETTANT DE CONTRÔLER LA POSITION D'UN LEVIER DE COMMANDE D'UNE BOÎTE DE VITESSES**
VORRICHTUNG ZUR KONTROLLE DER POSITION EINES GETRIEBESCHALTHEBELS
DEVICE ALLOWING CONTROL OVER THE POSITION OF A GEARBOX GEAR LEVER

(30) Priorité: 23.10.2014 FR 1460187
(43) Date de publication de la demande: 30.08.2017
(73) Titulaire: PSA Automobiles SA, 78300 Poissy (FR); Kongsberg Driveline Systems SAS, 74302 Cluses Cedex Haute-Savoie (FR)
(72) Inventeur: MARTINAT, Yoann, F-78310 Maurepas (FR); SALLE, Frédérik, F-74490 Mégevette (FR)
(74) Mandataire: Fernandez, Francis Lionel
(86) Numéro de dépôt international: PCT/FR2015/052641
(87) Numéro de publication internationale: WO 2016/062935

(56) Documents cités:
- EP-A1- 0 983 893
- EP-A2- 1 628 046
- DE-A1-102007 028 964
- FR-A1- 2 775 748

## Description

La présente invention concerne un dispositif permettant de contrôler la position d'un levier de commande d'une boîte de vitesses de véhicule, en particulier de véhicule automobile. Elle concerne, par conséquent, les moyens de réglage de la commande de vitesses par rapport à la boîte de vitesses du véhicule, ces moyens de réglage ayant la forme d'un dispositif de réglage, dit aussi « outil méthode ».

Ce dispositif de réglage, en position de fonctionnement, doit pouvoir se maintenir sur son support malgré les manipulations faites en usine par les opérateurs de montage. De plus, ce dispositif de réglage doit pouvoir être démonté en exerçant des efforts relativement faibles, de façon à satisfaire diverses prescriptions des cahiers des charges d'ergonomie des constructeurs automobiles.

La conception actuelle de ces dispositifs de réglage ou outils méthode repose sur l'utilisation de clips, qui n'offrent pas la garantie d'un verrouillage de la liaison sur la pièce support et d'un effort relativement faible pour le démontage. Ou bien ces clips sont volumineux pour répondre à la nécessité mentionnée ci-dessus de bon maintien lors des manipulations en usine, alors ils nécessitent des efforts de démontage trop importants, ou bien ces clips, plus fragiles, répondent aux cahiers des charges d'ergonomie, mais alors ils se maintiennent moins bien en position, et peuvent même se perdre en bord de ligne de montage avant les opérations de réglage.

On a déjà recherché des solutions techniques pour perfectionner ces dispositifs de réglage.

On connaît, selon le document FR 2 938 035, un outil de contrôle de la position d'un levier de commande manuelle de changement de rapport d'une boîte de vitesses par rapport à une surface de référence d'une butée fixe. Cet outil de contrôle comprend un corps, des moyens d'accouplement pour accoupler le corps au levier de commande, dans une position déterminée, un organe de contrôle monté pivotant sur le corps et présentant une partie d'appui apte à venir en contact avec la surface de référence de la butée, et un moyen de détection pour détecter la position angulaire de l'organe de contrôle par rapport au corps lorsque la partie d'appui de l'organe de contrôle est en contact avec la surface de référence de la butée.

On connaît également, selon le document EP 0 983 893 B1, un dispositif d'immobilisation pour le transport et le réglage d'un sélecteur de vitesses d'un véhicule automobile. Une pièce en matière plastique, qui est placée sur une partie du sélecteur de vitesses, immobilise ou bloque le sélecteur dans une position préférentielle par le biais d'une languette faisant ressort. Cette pièce en matière plastique présente une première encoche à laquelle va la préférence pour le transport et le montage du groupe du sélecteur et à partir de laquelle ledit sélecteur peut être mis dans une deuxième encoche à laquelle va la préférence pour le réglage ou l'assemblage du groupe du sélecteur avec les éléments de liaison avec la boîte de vitesses, et peut être immobilisé et bloqué. On connaît également de DE 10 2007 028 964 A1 un dispositif d'immobilisation d'arbre interne de boîte de vitesses relié à un levier de commande et comportant un corps de positionnement comprenant des moyens d'ancrage et un corps de verrouillage des moyens d'ancrage.

Le but de la présente invention est de fournir un dispositif permettant de contrôler la position d'un levier de commande d'une boîte de vitesses de véhicule, en particulier de véhicule automobile, qui soit d'une excellente tenue mécanique lors des nombreuses manipulations de la commande de vitesses, qu'il s'agisse des manipulations lors du transport vers les usines de montage ou des manipulations lors des opérations de montage et de réglage sur les véhicules.

Un autre but de la présente invention est de fournir un tel dispositif, qui garantisse les prescriptions ergonomiques évoquées précédemment en termes d'efforts de démontage.

Enfin, c'est aussi un but de la présente invention de fournir un tel dispositif, qui soit de conception, de fabrication et de montage simples, qui soit fiable, robuste et économique.

Pour parvenir à ces buts, la présente invention a pour objet un dispositif permettant de contrôler la position d'un levier de commande sur le boîtier de commande externe d'une boîte de vitesses, et ce dispositif, nouveau, est composé de deux parties : une première partie, dite «corps de positionnement », qui comprend une surface de maintien contrôlé du levier de commande et des moyens d'ancrage dudit corps de positionnement sur le boîtier de commande externe, et une seconde partie, dite « corps de verrouillage », qui est destinée à être montée sur le corps de positionnement avec une position de verrouillage et une position de déverrouillage, ledit corps de verrouillage comprenant des moyens de verrouillage desdits moyens d'ancrage du corps de positionnement sur le boîtier de commande externe, et des moyens d'ancrage du corps de verrouillage sur le corps de positionnement.

Selon l'invention, les moyens d'ancrage du corps de positionnement sur le boîtier de commande externe sont constitués par une pluralité de broches de « clippage », chaque broche de clippage présentant la forme d'un manchon cylindrique avec un renflement externe à sa partie inférieure, qui forme clip et est destiné à immobiliser la broche de clippage sur un épaulement correspondant de la commande externe.

Selon un mode préféré de réalisation de l'invention, les moyens de verrouillage des moyens d'ancrage du corps de positionnement sur le boîtier de commande externe de véhicule sont constitués par des pions cylindriques intégrés au corps de verrouillage, chaque pion cylindrique étant destiné à s'insérer dans l'alésage d'une broche de clippage correspondante lorsque le corps de verrouillage est en position de verrouillage de façon à empêcher la broche de clippage correspondante de s'extraire de sa position de clippage sur le boîtier de commande externe.

Le nombre de broches de clippage, ainsi que le nombre de pions cylindriques correspondants, peut être compris entre 1 et 4, de préférence ce nombre est égal à 4.

De manière préférentielle, les moyens d'ancrage du corps de verrouillage sur le corps de positionnement sont constitués par des languettes de clippage intégrées au corps de verrouillage, chaque languette de clippage étant destinée, lorsque le corps de verrouillage est en position de verrouillage, à immobiliser le corps de verrouillage sur un épaulement correspondant du corps de positionnement.

Les languettes de clippage peuvent avantageusement être au nombre de deux, situées de manière symétrique par rapport au plan de symétrie axiale du dispositif.

De manière préférentielle également, des épaulements de butée sont prévus sur le corps de positionnement pour retenir les languettes de clippage et solidariser ainsi en position de déverrouillage le mouvement du corps de positionnement avec le mouvement du corps de verrouillage, de telle sorte que lorsque l'opérateur retire le corps de verrouillage du boîtier de commande externe après la fin des réglages, le corps de positionnement est également et simultanément retiré du boîtier de commande externe.

Ces épaulements de butée peuvent, comme les languettes de clippage, avantageusement être au nombre de deux, situés de manière symétrique par rapport au plan de symétrie axiale du dispositif.

Le dispositif selon l'invention peut avantageusement comporter un moyen de blocage du levier de vitesses qui est constitué, d'une part, par des excroissances ou ergots en saillie de la surface interne du corps de verrouillage, et d'autre part, par des excroissances en saillie de la surface interne du corps de positionnement.

Le dispositif selon l'invention peut également avantageusement comporter un moyen de détrompage, qui est constitué, d'une part, par un pion en saillie de la surface du corps de positionnement, et d'autre part, par un orifice correspondant du corps de verrouillage. En variante, le pion peut être en saillie de la surface du corps de verrouillage, tandis que l'orifice correspondant est situé sur le corps de positionnement.

De préférence, la surface externe des broches de clippage, qui est en contact avec le corps de positionnement, peut présenter au moins une forme chanfreinée, qui permet de diminuer les efforts lorsque l'opérateur désolidarise le corps de verrouillage du corps de positionnement.

De préférence également, il peut être prévu une partie de préhension à la partie supérieure du corps de verrouillage, laquelle partie de préhension est avantageusement formée de deux pattes en forme sensiblement d'équerre pour permettre une bonne prise par les doigts de l'opérateur de montage.

Le dispositif en deux parties selon la présente invention peut avantageusement être réalisé en matière plastique.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 est une vue en coupe, schématique, illustrant le principe de fonctionnement du dispositif selon la présente invention permettant de contrôler la position d'un levier de commande d'une boîte de vitesses de véhicule,
- la figure 2 est une vue en coupe, également schématique, des moyens de verrouillage en position du dispositif de la figure 1,
- la figure 3 est une vue de dessus, en perspective, d'un exemple de réalisation du dispositif selon l'invention permettant de contrôler la position d'un levier de commande d'une boîte de vitesses de véhicule automobile, le dispositif étant en position verrouillée sur le boîtier de commande externe de la boîte de vitesses,
- la figure 4 est une vue en perspective du dispositif de contrôle de position de la figure 3, représenté seul avant son montage sur le boîtier de commande externe d'une boîte de vitesses de véhicule automobile,
- la figure 5 est une autre vue en perspective (selon un autre angle de vue) du dispositif de contrôle de position des figures 3 et 4, représenté seul également avant son montage sur le boîtier de commande externe d'une boîte de vitesses de véhicule automobile,
- la figure 6 est une vue en coupe, schématique, du dispositif selon l'invention des figures 3 à 5, le dispositif étant en position montée et verrouillée sur le boîtier de commande externe de boîte de vitesses,
- la figure 7 est une vue en coupe, schématique, agrandie, du moyen de verrouillage du dispositif des figures 3 à 6 en position montée et verrouillée sur le boîtier de commande externe de boîte de vitesses,
- la figure 8 est une vue en coupe, schématique, du dispositif selon l'invention des figures 3 à 7, le dispositif étant en position déverrouillée sur le boîtier de commande externe de boîte de vitesses,
- la figure 9 une vue en coupe, schématique, agrandie, de la partie du dispositif recevant le moyen de déverrouillage de la figure 7 lorsque ce dernier est extrait de sa position de verrouillage, le dispositif étant alors en position démontée,
- la figure 10 est une vue en perspective d'une première variante de réalisation du dispositif selon la présente invention, qui comporte un moyen de blocage du levier de vitesses en position fixe,
- la figure 11A est une vue en coupe, schématique, représentant le corps de verrouillage du dispositif de la figure 10,
- la figure 11B est une vue en coupe, schématique, représentant le corps de positionnement du dispositif de la figure 10,
- la figure 12 est une vue en perspective d'une seconde variante de réalisation du dispositif selon la présente invention, qui comporte un moyen de détrompage,
- la figure 13 est une vue en coupe, schématique, agrandie, très partielle, représentant le moyen de détrompage de la figure 12, et
- les figures 14 et 15 sont des schémas illustrant un autre mode de réalisation des broches de clippage du corps de verrouillage du dispositif selon l'invention permettant de faciliter le démontage de ce dernier.

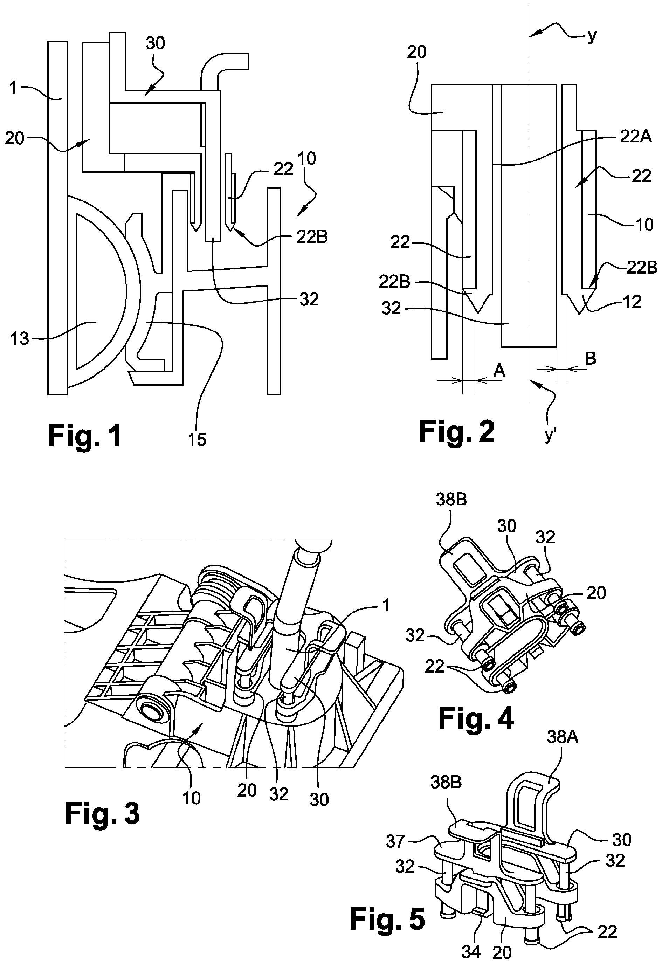

En référence aux dessins des figures 1 et 2, on a représenté le principe de fonctionnement du dispositif selon la présente invention permettant de contrôler la position d'un levier de commande, de référence 1, par rapport à une pièce support, qui est le boîtier de commande externe, de référence générale 10, de la boîte de vitesses d'un véhicule automobile.

Dans cette représentation très schématique du levier 1 et de la commande externe 10 de boîte de vitesses, la référence 15 désigne le palier à rotule ou palier sphérique de support articulé du levier 1, et la référence 13 désigne la rotule elle-même, dans laquelle est monté le levier de vitesses 1.

Selon le principe même de la présente invention, il est prévu un dispositif de réglage monté sur le boîtier de commande externe 10, et ce dispositif de réglage est réalisé en deux parties, à savoir une première partie, dite « corps de positionnement », de référence générale 20, qui comporte des moyens d'ancrage sur le boîtier de commande externe 10, et une seconde partie, dite « corps de verrouillage », de référence générale 30.

Le corps de verrouillage 30 comporte, d'une part, des moyens de verrouillage des moyens d'ancrage du corps de positionnement 20 sur le boîtier de commande externe 10, et d'autre part, des moyens d'ancrage du corps de verrouillage 30 même sur le corps de positionnement 20.

Les moyens d'ancrage du corps de positionnement 20 sur le boîtier de commande externe 10 sont des moyens de clippage et sont constitués par une pluralité de broches de « clippage », de référence collective 22. Chaque broche de clippage 22 présente la forme d'un manchon cylindrique d'alésage 22A et d'axe yy' (figure 2). A l'extrémité inférieure de chaque broche 22 est prévu un renflement en saillie radiale externe 22B, qui forme clip et est destiné à immobiliser la broche de clippage 22 sur un épaulement 12 correspondant de la commande externe 10.

De façon à verrouiller le dispositif de l'invention en position montée sur le boîtier de commande externe 10, des moyens de verrouillage des broches de clippage 22 sur le boîtier de commande externe 10 sont prévus. Ces moyens de verrouillage sont constitués par des pions cylindriques, de référence collective 32, intégrés au corps de verrouillage 30. Chaque pion cylindrique 32 est destiné à s'insérer dans l'alésage 22A d'une broche de clippage 22 correspondante lorsque le corps de verrouillage 30 est en position de verrouillage. La présence du pion cylindrique 32 dans l'alésage 22A correspondant empêche la broche de clippage 22 de s'extraire de sa position de clippage.

En position déverrouillée (les broches de clippage 22 étant libérées des pions cylindriques 32), pour ôter le dispositif de l'invention du boîtier de commande externe 10, il faut désengager les renflements 22B des broches de clippage 22 des épaulements 12 du boîtier 10. Il importe de noter que pour pouvoir effectuer cette opération de libération des broches de clippage 22, il faut nécessairement que l'épaisseur radiale du renflement 22B (illustrée par la distance « A » sur la figure 2) soit supérieure au jeu radial « B » entre le pion cylindrique 32 et l'alésage 22A de la broche de clippage 22.

En référence aux dessins des figures 3 à 9, on a représenté, de manière plus que détaillée, un exemple de réalisation du dispositif de contrôle de position selon la présente invention.

Les pièces et parties de pièces des figures 3 à 9, qui sont identiques ou de fonction similaire aux pièces et parties de pièces des figures 1 et 2, sont désignées par les mêmes références numériques que ces dernières.

Comme montré sur les figures 3 à 5, le dispositif selon l'invention est composé des deux parties mentionnées précédemment :
- le corps de positionnement 20, qui comprend une surface de maintien contrôlé du levier de commande 1 et quatre broches de clippage 22 (figures 4 et 5) permettant l'ancrage par clippage du corps de positionnement 20 sur le boîtier de commande externe 10, et
- le corps de verrouillage » 30, en position de verrouillage sur la figure 3, qui comprend quatre pions cylindriques 32 pour verrouiller en position les broches de clippage 22 sur le boîtier de commande externe 10. Des moyens d'ancrage (par clippage également), référencés 34, décrits de manière détaillée dans la suite du texte, sont prévus pour clippper le corps de verrouillage 30 sur le corps de positionnement 20.

Le corps de verrouillage 30 présente la forme générale d'une semelle 37 (figure 5 notamment) prolongée vers le bas par les quatre pions cylindriques 32 et vers le haut par deux poignées 38A et 38B, chacune en forme courbée ou sensiblement d'équerre pour permettre une bonne préhension par les doigts de l'opérateur de montage.

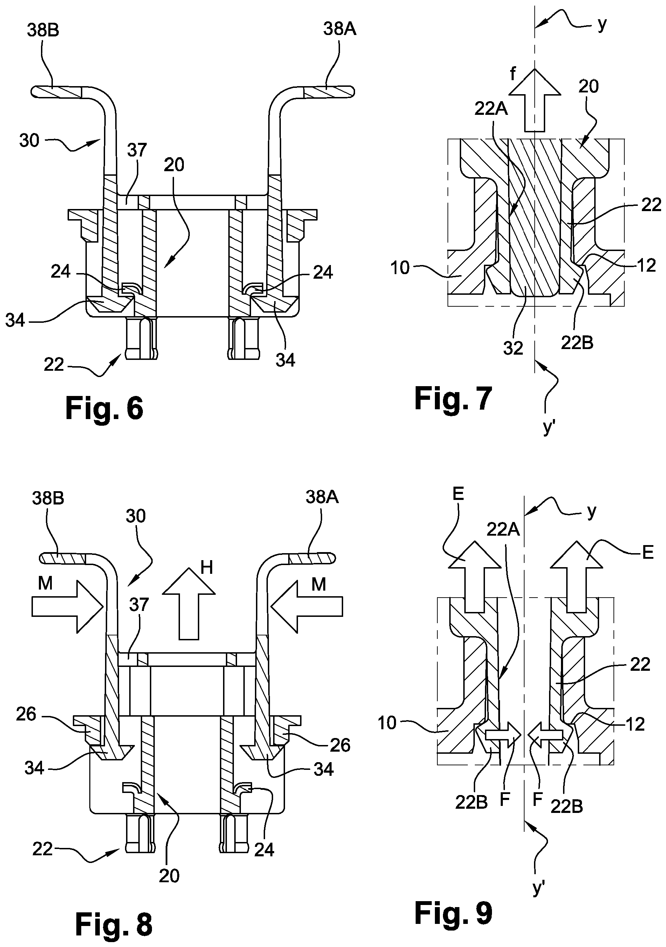

Le fonctionnement du dispositif de contrôle de position selon la présente invention est le suivant, en référence aux dessins des figures 6 à 9.

La figure 6 illustre le dispositif de l'invention en position montée et verrouillée (le boîtier de commande externe 10 n'est pas représenté). Le corps de verrouillage 30 est « ancré » sur le corps de positionnement 20 par l'intermédiaire de deux languettes de clippage 34 situées de manière symétrique par rapport au plan de symétrie axiale du dispositif. Chaque languette de clippage 34 vient s'immobiliser sur un arrêtoir ou épaulement radial référencé 24 correspondant du corps de positionnement 20. Comme montré sur la vue agrandie de la figure 7, dans cette position de verrouillage, les pions cylindriques 32 sont engagés dans les alésages cylindriques 22A d'axe yy' des broches de clippage 22, ce qui interdit aux broches de clippage 22 de s'extraire de leur logement dans le boîtier de commande externe 10 (c'est-à-dire de s'extraire selon la direction « f » de la figure 7), les épaulements 22B des broches étant alors maintenus fermement en butée contre les épaulements 12 du boîtier 10.

En position démontée, le corps de verrouillage 30 est « déclippé » du corps de positionnement 20 en exerçant une pression radiale (flèches « M » de la figure 8) sur les pattes de préhension 38A et 38B du corps de verrouillage. Cette pression vient, du fait de l'élasticité du matériau constituant le dispositif, écarter radialement les languettes de clippage 34 de leur position d'immobilisation sur les épaulements 24, et les libérer pour permettre de tirer vers le haut (flèche « H » de la figure 8) le corps de verrouillage 30. Dans cette position, comme montré sur le dessin de la figure 9, les pions cylindriques 32 ne sont plus présents dans les alésages 22A des broches de clippage correspondantes, ce qui permet au corps de positionnement 20 de s'extraire de son logement dans le boîtier de commande externe 10. Plus précisément, dans cette position démontée des figures 8 et 9, les renflements flexibles 22B des broches de clippage 22 sont radialement déplacées (flèches « F » de la figure 9) et quittent les épaulements 12 pour permettre l'extraction axiale (flèches « E » de la figure 9) du corps de positionnement 20 par rapport au boîtier 10.

Comme représenté également sur le dessin de la figure 8, des épaulements de butée, de référence 26, sont prévus au voisinage de la partie supérieure du corps de positionnement 20 pour retenir les languettes de clippage 34 et solidariser ainsi en position de déverrouillage le mouvement (selon la flèche « H ») du corps de positionnement 20 avec le mouvement du corps de verrouillage 30, de telle sorte que lorsque l'opérateur retire le corps de verrouillage 30 du boîtier de commande externe 10 après la fin des réglages, le corps de positionnement 20 est également et simultanément retiré du boîtier de commande externe 10 par la liaison formée de la languette 34 et de l'épaulement 26.

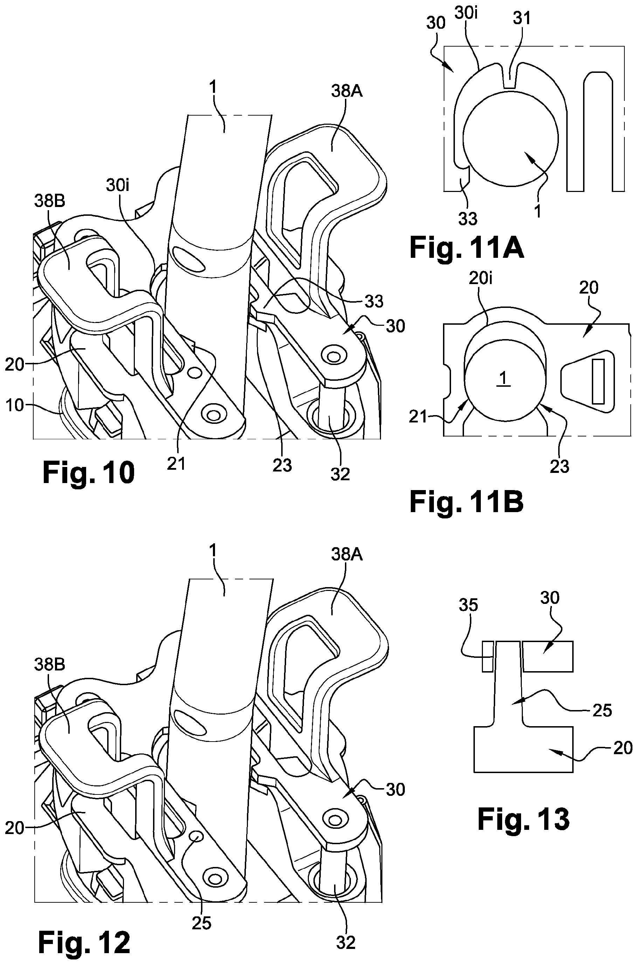

En référence aux dessins des figures 10, 11A et 11B, on a représenté une première variante de réalisation du dispositif selon l'invention, qui comporte un moyen de blocage du levier de vitesses 1 en position fixe sur ledit dispositif. Ce moyen de blocage est constitué, d'une part, par deux excroissances de la surface interne 30i du corps de verrouillage 30 ou ergots, qui sont référencés respectivement 31 (figure 11A) et 33 (figures 10 et 11A), et d'autre part, par deux excroissances de la surface interne 20i du corps de positionnement 20, appelées aussi ergots, qui sont référencées respectivement 21 et 23 (figures 10 et 11B). Le corps de positionnement 20 étant en position montée sur le boîtier de commande externe 10, le corps de verrouillage 30 est « clippé », comme décrit précédemment, sur le corps de positionnement 20. Dans cette position du corps de positionnement 20 et du corps de verrouillage 30, les ergots 21, 23, 31, 33 viennent bloquer le levier de vitesses 1 en position fixe, de telle sorte qu'il n'y a plus aucun mouvement possible pour ce dernier.

En référence aux dessins des figures 12 et 13, on a représenté une seconde variante de réalisation du dispositif selon l'invention, qui comporte un moyen de détrompage. Ce moyen de détrompage est constitué, d'une part, par une excroissance du corps de positionnement 20 en forme de pion, lequel pion est dirigée sensiblement verticalement et est désigné par la référence 25, et d'autre part, par un orifice correspondant 35 du corps de verrouillage 30, lequel orifice 35 est destiné à recevoir le pion 25.

Le corps de positionnement 20 étant en position montée sur le boîtier de commande externe 10, le corps de verrouillage 30 est « clippé », comme décrit précédemment, sur le corps de positionnement 20. Grâce à la présence du moyen de détrompage 25, 35, le corps de positionnement 20 reçoit le corps de verrouillage 30 selon un bon sens de montage, c'est-à-dire avec le pion 25 inséré dans l'orifice 35 (figure 13).

Dans le cas d'un mauvais sens de montage du corps de verrouillage 30 sur le corps de positionnement 20, le pion 25 vient bloquer le corps de verrouillage 30 et interdit le « clippage » de ce dernier sur le corps de positionnement 20.

Une variante de ce moyen de détrompage pourrait être constituée par un pion en excroissance, situé non pas sur le corps de positionnement 20 mais sur le corps de verrouillage 30, tandis que l'orifice correspondant se trouverait alors sur le corps de positionnement 20.

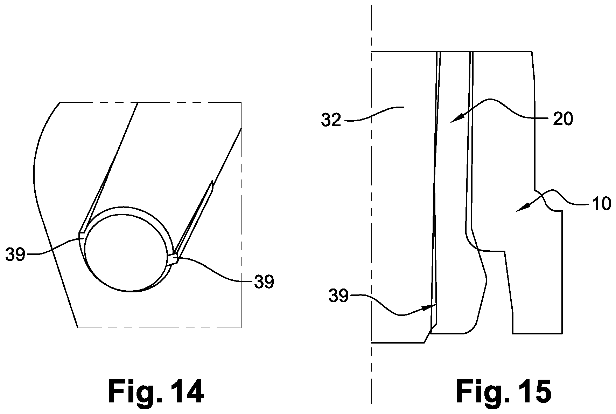

En référence aux dessins des figures 14 et 15, on a représenté une autre variante de réalisation du dispositif selon l'invention, dans laquelle les broches de clippage 32 du corps de verrouillage 30 présentent des formes géométriques qui permettent de diminuer les efforts lorsque l'opérateur désolidarise le corps de verrouillage 30 du corps de positionnement 20. Ces formes géométriques particulières, chanfreinées, des broches de clippage 32 sont désignées par la référence numérique 39. Grâce à ces formes chanfreinées 39, la surface de contact des broches 39 sur le corps de positionnement 20 est sensiblement diminuée et cette diminution contribue à la réduction des efforts de démontage.

Il importe de noter que le nombre et la forme des broches de clippage et/ou des languettes de clippage peuvent être différents du nombre et de la forme des broches et des languettes de clippage décrites dans l'exemple de réalisation ci-dessus du dispositif selon l'invention.

De la même façon, la forme des pattes de préhension du dispositif peut être différente.

Enfin, la matière du dispositif peut être une matière plastique ou tout autre matière présentant une élasticité suffisante au niveau des broches de clippage et des languettes de clippage, de façon à permettre un fonctionnement optimal du verrouillage et du déverrouillage.

Le dispositif décrit ci-dessus permettant de contrôler la position d'un levier de commande d'une boîte de vitesses présente de nombreux avantages, parmi lesquels les avantages suivants :
- il présente une excellente tenue mécanique, ce qui lui permet de rester en place, fermement maintenu, lors des nombreuses manipulations de la commande de vitesses, qu'il s'agisse des manipulations lors du transport vers les usines de montage automobile ou des manipulations lors des opérations de montage et de réglage sur les véhicules,
- il peut être démonté sans exercer des efforts de démontage trop forts, ce qui satisfait les prescriptions ergonomiques des cahiers des charges des constructeurs, et
- Il est de fonctionnement simple, robuste, fiable et économique.

## Revendications

1. Dispositif permettant de contrôler la position d'un levier de commande (1) sur le boîtier de commande externe (10) d'une boîte de vitesses, ledit dispositif étant composé de deux parties :
- une première partie, dite « corps de positionnement » (20), qui comprend une surface de maintien contrôlé du levier de commande (1) et des moyens d'ancrage dudit corps de positionnement (20) sur le boîtier de commande externe (10), et
- une seconde partie, dite « corps de verrouillage » (30), qui est destinée à être montée sur le corps de positionnement (20) avec une position de verrouillage et une position de déverrouillage, ledit corps de verrouillage (30) comprenant des moyens de verrouillage desdits moyens d'ancrage du corps de positionnement (20) sur le boîtier de commande externe (10), et des moyens d'ancrage du corps de verrouillage (30) sur le corps de positionnement (20),
ledit dispositif étant **caractérisé en ce que** les moyens d'ancrage du corps de positionnement (20) sur le boîtier de commande externe (10) sont constitués par une pluralité de broches de « clippage » (22), chaque broche de clippage (22) présentant la forme d'un manchon cylindrique avec un renflement externe (22B) à sa partie inférieure, qui forme clip et est destiné à immobiliser la broche de clippage (22) sur un épaulement (12) correspondant de la commande externe (10).

2. Dispositif selon la revendication 1, **caractérisé en ce que** les moyens de verrouillage desdits moyens d'ancrage du corps de positionnement (20) sur le boîtier de commande externe (10) de véhicule sont constitués par des pions cylindriques (32) intégrés au corps de verrouillage (30), chaque pion cylindrique (32) étant destiné à s'insérer dans l'alésage (22A) d'une broche de clippage (22) correspondante lorsque le corps de verrouillage (30) est en position de verrouillage de façon à empêcher la broche de clippage (22) correspondante de s'extraire de sa position de clippage sur le boîtier de commande externe (10).

3. Dispositif selon les revendications 1 et 2, **caractérisé en ce que** le nombre de broches de clippage (22), ainsi que le nombre de pions cylindriques (32) correspondants, est compris entre 1 et 4, de préférence est égal à 4.

4. Dispositif selon l'une quelconque des revendications 1 à 3, **caractérisé en ce que** les moyens d'ancrage du corps de verrouillage (30) sur le corps de positionnement (20) sont constitués par des languettes de clippage (34) intégrées au corps de verrouillage (30), chaque languette de clippage (34) étant destinée, lorsque le corps de verrouillage (30) est en position de verrouillage, à immobiliser le corps de verrouillage (30) sur un épaulement (24) correspondant du corps de positionnement (20).

5. Dispositif selon la revendication 4, **caractérisé en ce que** les languettes de clippage (34) sont au nombre de deux, situées de manière symétrique par rapport au plan de symétrie axiale du dispositif.

6. Dispositif selon l'une quelconque des revendications 1 à 5, **caractérisé en ce que** des clips de butée (26) sont prévus sur le corps de positionnement (20) pour solidariser en position de déverrouillage le mouvement du corps de positionnement (20) avec le mouvement du corps de verrouillage (30), de telle sorte que lorsque l'opérateur retire le corps de verrouillage (30) du boîtier de commande externe (10) après la fin des réglages, le corps de positionnement (20) est également et simultanément retiré du boîtier de commande externe (10).

7. Dispositif selon la revendication 6, **caractérisé en ce que** les clips de butée (26) sont au nombre de deux, situées de manière symétrique par rapport au plan de symétrie axiale du dispositif.

8. Dispositif selon l'une quelconque des revendications 1 à 7, **caractérisé en ce qu'**il comporte un moyen de blocage du levier de vitesses (1) qui est constitué, d'une part, par des ergots (31, 33) en saillie de la surface interne (30i) du corps de verrouillage (30), et d'autre part, par des ergots (21, 23) en saillie de la surface interne (20i) du corps de positionnement (20).

9. Dispositif selon l'une quelconque des revendications 1 à 8, **caractérisé en ce qu'**il comporte un moyen de détrompage, qui est constitué, d'une part, par un pion (25) en saillie de la surface du corps de positionnement (20), et d'autre part, par un orifice correspondant (35) du corps de verrouillage (30).

10. Dispositif selon l'une quelconque des revendications 1 à 8, **caractérisé en ce qu'**il comporte un moyen de détrompage, qui est constitué, d'une part, par un pion en saillie de la surface du corps de verrouillage (30), et d'autre part, par un orifice correspondant du corps de positionnement (20).

11. Dispositif selon l'une quelconque des revendications 1 à 10, **caractérisé en ce que** la surface externe des broches de clippage (32) en contact avec le corps de positionnement (20) présente au moins une forme chanfreinée (39) qui permet de diminuer les efforts lorsque l'opérateur désolidarise le corps de verrouillage (30) du corps de positionnement (20).

12. Dispositif selon l'une quelconque des revendications 1 à 11, **caractérisé en ce qu'**une partie de préhension est prévue à la partie supérieure du corps de verrouillage, laquelle partie de préhension est formé de deux pattes (38A, 38B) en forme d'équerre pour permettre une bonne prise par les doigts de l'opérateur de montage.

13. Dispositif selon l'une quelconque des revendications 1 à 12, **caractérisé en ce qu'**il est réalisé en matière plastique.

## Patentansprüche

1. Vorrichtung zum Steuern der Position eines Steuerhebels (1) an der externen Steuereinheit (10) eines Getriebes, wobei die Vorrichtung aus zwei Teilen besteht:
- einen ersten Teil, der als "Positionierkörper" (20) bezeichnet wird und eine Oberfläche zum kontrollierten Halten des Steuerhebels (1) und Mittel zum Verankern des Positionierkörpers (20) an der externen Steuereinheit (10) umfasst, und
- einen zweiten Teil, der als "Verriegelungskörper" (30) bezeichnet wird und an dem Positionierungskörper (20) mit einer Verriegelungsposition und einer Entriegelungsposition angebracht werden soll, wobei der Verriegelungskörper (30) Mittel umfasst zum Verriegeln der Mittel zum Verankern des Positionierkörpers (20) am externen Steuerkasten (10) und zum Verankern des Verriegelungskörpers (30) am Positionierkörper (20);
Die Vorrichtung ist **dadurch gekennzeichnet, dass** die Mittel zum Verankern des Positionierkörpers (20) an der externen Steuerbox (10) aus mehreren "Clipping" -Stiften (22) bestehen, wobei jeder Clipping-Pin (22) die Form einer zylindrischen Hülse mit einer äußeren Ausbuchtung (22B) an ihrem unteren Teil aufweist, die einen Clip bildet und den Klemmstift (22) an einer entsprechenden Schulter (12) der äußeren Steuerung (10) fixieren soll.

2. Vorrichtung nach Anspruch 1, **dadurch gekennzeichnet, dass** die Verriegelungsmittel der Verankerungsmittel des Positionierkörpers (20) an der externen Steuereinheit (10) des Fahrzeugs aus in das Fahrzeug integrierten Zylinderstiften (32) bestehen. Verriegelungskörper (30), wobei jeder zylindrische Stift (32) in die Bohrung (22A) eines entsprechenden Verriegelungsstifts (22) passen soll, wenn sich der Verriegelungskörper (30) in der Verriegelungsposition von befindet um zu verhindern, dass der entsprechende Clipping-Stift (22) aus seiner Clipping-Position am externen Steuerkasten (10) herausgezogen wird.

3. Vorrichtung nach Anspruch 1 und 2, **dadurch gekennzeichnet, dass** die Anzahl der Clipping-Pins (22) sowie die Anzahl der entsprechenden zylindrischen Pins (32) zwischen 1 und 4 liegt, vorzugsweise gleich 4 ist.

4. Vorrichtung nach einem der Ansprüche 1 bis 3, **dadurch gekennzeichnet, dass** das Verankerungsmittel des Verriegelungskörpers (30) am Positionierkörper (20) aus in die Verriegelungskörper (30), wobei jede Klemmlasche (34) vorgesehen ist, wenn sich der Verriegelungskörper (30) in der Verriegelungsposition befindet, den Verriegelungskörper (30) an einer entsprechenden Schulter (24) des Verriegelungskörpers zu fixieren. Positionierung (20).

5. Vorrichtung nach Anspruch 4, **dadurch gekennzeichnet, dass** die Clipping-Laschen (34) zwei sind und symmetrisch zur axialen Symmetrieebene der Vorrichtung angeordnet sind.

6. Vorrichtung nach einem der Ansprüche 1 bis 5, **gekennzeichnet dadurch, dass** Anschlagklammern (26) an dem Positionierkörper (20) vorgesehen sind, um in der entriegelten Position die Bewegung des Positionierkörpers (20) zu sichern. mit der Bewegung des Verriegelungskörpers (30), so dass, wenn der Bediener den Verriegelungskörper (30) nach dem Ende der Einstellungen aus dem externen Steuerkasten (10) entfernt, auch der Positionierungskörper (20) ist und gleichzeitig aus der externen Steuerbox (10) entfernt.

7. Vorrichtung nach Anspruch 6, **dadurch gekennzeichnet, dass** die Anschlagklammern (26) zwei sind und symmetrisch zur axialen Symmetrieebene der Vorrichtung angeordnet sind.

8. Vorrichtung nach einem der Ansprüche 1 bis 7, **dadurch gekennzeichnet, dass** sie ein Verriegelungsmittel des Schalthebels (1) umfasst, das einerseits durch Laschen (31, 33) in Projektion der Innenfläche (30i) des Verriegelungskörpers (30) und andererseits durch Stollen (21, 23), die von der Innenfläche (20i) des Positionierkörpers (20) vorstehen.

9. Vorrichtung nach einem der Ansprüche 1 bis 8, **dadurch gekennzeichnet, dass** sie ein Schlüsselmittel umfasst, das einerseits aus einem Stift (25) besteht, der von der Oberfläche des Positionierkörpers vorsteht. (20) und andererseits durch eine entsprechende Öffnung (35) des Verriegelungskörpers (30).

10. Vorrichtung nach einem der Ansprüche 1 bis 8, **dadurch gekennzeichnet, dass** sie ein narrensicheres Mittel umfasst, das einerseits aus einem Stift besteht, der von der Oberfläche des Verriegelungskörpers (30) vorsteht. und andererseits durch eine entsprechende Öffnung des Positionierkörpers (20).

11. Vorrichtung nach einem der Ansprüche 1 bis 10, **dadurch gekennzeichnet, dass** die Außenfläche der Clipping-Stifte (32) in Kontakt mit dem Positionierkörper (20) mindestens eine abgeschrägte Form (39) aufweist, die dies ermöglicht Reduzieren Sie die Kräfte, wenn der Bediener den Verriegelungskörper (30) vom Positionierkörper (20) trennt.

12. Vorrichtung nach einem der Ansprüche 1 bis 11, **dadurch gekennzeichnet, dass** am oberen Teil des Verriegelungskörpers ein Greifteil vorgesehen ist, dessen Greifteil aus zwei Ösen (38A, 38B) in Form von besteht Quadrat, um einen guten Griff durch die Finger des Montagebetreibers zu ermöglichen.

13. Vorrichtung nach einem der Ansprüche 1 bis 12, **dadurch gekennzeichnet, dass** sie aus Kunststoff besteht.

## Claims

1. Device for controlling the position of a control lever (1) on the external control unit (10) of a gearbox, said device being composed of two parts:
- a first part, called a "positioning body" (20), which comprises a surface for controlled holding of the control lever (1) and means for anchoring said positioning body (20) on the external control unit (10), and
- a second part, called a "locking body" (30), which is intended to be mounted on the positioning body (20) with a locking position and an unlocking position, said locking body (30) comprising means for locking the anchoring means of the positioning body (20) on the external control box (10), and anchoring means of the locking body (30) on the positioning body (20),
said device being **characterized in that** the means for anchoring the positioning body (20) on the external control box (10) are constituted by a plurality of "clipping" pins (22), each clipping pin (22) having the shape of a cylindrical sleeve with an external bulge (22B) at its lower part, which forms a clip and is intended to immobilize the clipping pin (22) on a corresponding shoulder (12) of the external control (10).

2. Device according to claim 1, **characterized in that** the locking means of said anchoring means of the positioning body (20) on the external control unit (10) of the vehicle consist of cylindrical pins (32) integrated into the vehicle. locking body (30), each cylindrical pin (32) being intended to fit into the bore (22A) of a corresponding clipping pin (22) when the locking body (30) is in the locking position of so as to prevent the corresponding clipping pin (22) from being pulled out of its clipping position on the external control box (10).

3. Device according to claims 1 and 2, **characterized in that** the number of clipping pins (22), as well as the number of corresponding cylindrical pins (32) is between 1 and 4, preferably is equal to 4.

4. Device according to any one of claims 1 to 3, **characterized in that** the anchoring means of the locking body (30) on the positioning body (20) consist of clipping tabs (34) integrated into the locking body (30), each clipping tab (34) being intended, when the locking body (30) is in the locking position, to immobilize the locking body (30) on a corresponding shoulder (24) of the locking body positioning (20).

5. Device according to claim 4, **characterized in that** the clipping tabs (34) are two in number, located symmetrically with respect to the axial plane of symmetry of the device.

6. Device according to any one of claims 1 to 5, **characterized in that** stop clips (26) are provided on the positioning body (20) to secure in the unlocked position the movement of the positioning body (20) with the movement of the locking body (30), so that when the operator removes the locking body (30) from the external control box (10) after the end of the adjustments, the positioning body (20) is also and simultaneously removed from the external control box (10).

7. Device according to claim 6, **characterized in that** the stop clips (26) are two in number, located symmetrically with respect to the axial plane of symmetry of the device.

8. Device according to any one of claims 1 to 7, **characterized in that** it comprises a locking means of the gear lever (1) which consists, on the one hand, by lugs (31, 33) in projection of the internal surface (30i) of the locking body (30), and on the other hand, by lugs (21, 23) projecting from the internal surface (20i) of the positioning body (20).

9. Device according to any one of claims 1 to 8, **characterized in that** it comprises a foolproofing means, which is constituted, on the one hand, by a pin (25) projecting from the surface of the positioning body. (20), and on the other hand, by a corresponding orifice (35) of the locking body (30).

10. Device according to any one of claims 1 to 8, **characterized in that** it comprises a foolproofing means, which is constituted, on the one hand, by a pin projecting from the surface of the locking body (30), and on the other hand, by a corresponding orifice of the positioning body (20).

11. Device according to any one of claims 1 to 10, **characterized in that** the outer surface of the clipping pins (32) in contact with the positioning body (20) has at least one chamfered shape (39) which allows reduce the forces when the operator separates the locking body (30) from the positioning body (20).

12. Device according to any one of claims 1 to 11, **characterized in that** a gripping part is provided at the upper part of the locking body, which gripping part is formed of two lugs (38A, 38B) in the form of square to allow a good grip by the fingers of the assembly operator.

13. Device according to any one of claims 1 to 12, **characterized in that** it is made of plastic.
